# EUROPEAN PATENT APPLICATION

(11) **EP 1 683 411 A1**
(43) Date of publication of application: **26.07.2006**
(21) Application number: 05077621.0
(22) Date of filing: 18.10.2005
(51) Int. Cl.: A01K 5/01

(54) **A feeding installation**

(30) Priority: 19.01.2005 NL 1028069; 07.07.2005 NL 1029454
(71) Applicant: Lely Enterprises AG, 6300 ZUG (CH)
(72) Inventor: Van den Berg, Karel, 2971 BR Bleskensgraaf (NL); Moerman, Kevin Mattheus, 3147 PA Maassluis (NL); Steen, Geert Cornelis, 3155 GA Maasland (NL)
(74) Representative: Corten, Maurice Jean F.M.

(57) **Abstract**

A mobile feeding installation comprising an animal identification device (2) for emitting an animal recognition signal, a feed-containing surface (4), a storage container (5) with an outflow aperture (6), a metering device (7) for metering feed on the feed-containing surface (4), a transport device (8) for transporting feed from the outflow aperture (6) to the metering device (7), and a computer (9) for controlling the metering device (7) on the basis of the animal recognition signal. At least two side walls of the feeding installation are constituted by a strained tarpaulin (15). The storage container (5) is disposed substantially in the lower part of the feeding installation.

## Description

The invention relates to a feeding installation according to the preamble of claim 1.

Such a feeding installation is known from European patent application EP-A2-1300069. The feeding installation disclosed herein comprises a feeding column with a number of troughs with a feed-containing surface disposed at its lower side, which troughs can be filled from storage containers. The storage containers are fastened to the feeding column above the feed troughs. A transport auger is disposed in a storage container for transporting feed to a metering device in the centre of the feeding column. Said metering device is designed as a bowl-shaped space whose bottom is capable of being opened. A channel-shaped chute guides the feed to a relevant trough. Animal identification means are disposed for automatically identifying an animal located near a trough. Said animal identification means co-operate with a computer which controls the metering device.

A disadvantage of the known feeding installation is that it is relatively high and that its centre of gravity is located at a high level, in particular when the storage containers are filled. This makes it difficult to displace the feeding installation and a proper staying is required. Therefore, the known feeding installation will in particular be disposed fixedly in a stable. However, it is desirable also to supply additional feed to cattle grazing in the pasture. To this end, it is necessary to displace the feeding installation regularly when the herd to be fed has to be moved to another pasture.

It is an object of the invention to provide a feeding installation which is capable of being displaced in a simple manner.

This is achieved by means of a feeding installation of the above-mentioned type, characterized in that at least two side walls of the feeding installation are constituted by a strained tarpaulin and in that the storage container is disposed substantially in the lower part of the feeding installation. By means of these inventive measures there is obtained a light construction with a low point of gravity. Owing to this, the feeding installation can be displaced easily, for example in the loading platform of a pick-up. By feed-containing surface is meant the surface of a trough on which lies the feed which is at the disposal of an animal.

The invention further relates to a mobile feeding installation as claimed in claim 2. Owing to the fact that the outflow aperture is located at a lower level than the feed-containing surface, the storage container can be disposed near the ground. This means that the feeding installation has a low point of gravity, so that it can be displaced easily.

In particular, the metering device comprises a rotatable conveying device for metering feed by means of rotation. Such a conveying device can be controlled relatively accurately and simply by means of an electric motor.

This makes it possible to control both the transport from the storage container and the metering by means of a single electric motor. This construction thus contributes to a simple and light design of the feeding installation.

The conveying device preferably comprises an auger that is only fastened to the storage container. By fastening the conveying device in such a way the conveying device is capable of following movements of the storage container. This is in particular important if the storage container is made of tarpaulin.

In a further favourable embodiment, the feeding installation comprises its own current supply for at least the control of the transport auger. In a pasture and, to a still greater extent, on large grassy plains the current supply from a fixed electricity grid is a problem because long cables are required.

The current supply comprises in particular a solar panel with solar cells. In order to have enough current also at night and on cloudy days, there may be disposed an accumulator to store superfluous current during sunny moments.

The solar panel is preferably disposed at the upper side of the feeding installation. This ensures that without further measures being taken the vulnerable solar panel is beyond the reach of the animals to be fed.

According to a further favourable embodiment of the invention, the feed-containing surface is provided with a closing device for closing the access to the feed-containing surface for an animal and the closing device is controllable by the computer. It has been found that animals to which no feed needs to be supplied regularly go to the feed-containing surface and look whether there is still remaining feed. This behaviour is undesirable because these animals prevent access to the feeding installation for animals that are eligible to be fed. This undesirable behaviour can be prevented by closing the feed-containing surface when an animal has consumed the allotted amount of feed.

According to again another favourable embodiment of the invention, the feeding installation comprises a short side and a long side, the short side comprising the feed-containing surface. With such a construction an eating animal will take up a position parallel to and in line with the feeding installation. Owing to this, forward forces exerted by the animal on the feeding installation can be absorbed properly.

In a further favourable embodiment, the long side comprises a flexible tarpaulin strained by a frame. The vulnerable components of the construction can be disposed between said tarpaulin, so that they are protected in a simple manner against external influences.

In another favourable embodiment, the walls of the storage container are constituted by a flexible tarpaulin. Such a construction can be disassembled and folded up in a simple manner, so that it needs little space during transport.

In a constructively favourable embodiment, the storage container comprises a filling aperture which is capable of being closed by a flap, the flap forming a hopper in the opened position. Owing to this, the closing function and the hopper function are integrated.

In a further constructively favourable embodiment, the upper side of the feeding installation extends in such a way that it covers the feed-containing surface at the upper side. By covering the upper side in this way, contamination of the feed-containing surface in case of, for example, rain is prevented in an advantageous manner.

In another embodiment according to the invention, there is provided a presence sensor for detecting the presence of an animal near the feed-containing surface and for emitting a presence signal to the computer. This makes it possible to check whether an animal is located in the vicinity of the trough. It is thus possible, for example, to determine whether an animal's head is located in the trough. If this is not the case, this is an indication that the animal is walking away from the feeding installation, so that the supply of feed must be stopped immediately.

In a further favourable embodiment, the animal identification device is capable of being activated by the presence signal. Animal recognition operates in general by emitting a particular electromagnetic detection signal. If an animal receives said detection signal by means of a transponder, the transponder will send back an animal-specific signal. On the basis of said animal-specific signal the identity is determined. Constant emission of the detection signal costs continuously energy, also when it is not necessary because no animal is present. By using the animal identification device only when it is really necessary, energy is saved. In particular if the feeding installation is not provided with a supply network, an economical use of energy is important.

In order to make the feeding installation easily displaceable, in a particular embodiment the feeding installation comprises wheels.

It is further advantageous if the feeding installation comprises an animal treatment device, such as a spraying device or a marking device, for treating an animal during eating. Because the animals come voluntarily to the feeding installation, they need not to be caught for an animal treatment. In this case, the animal treatment device can be controlled by the computer, so that the animal treatment can take place individually. Such an animal treatment device is in particular advantageous in extensive prairie-like areas where catching animals for a treatment, such as administration of medicine, is extra difficult.

The invention will be explained hereinafter in further detail with reference to an exemplary embodiment, in which:
Figure 1 shows a side view of an embodiment of the feeding installation according to the invention;
Figure 2 shows the interior of a feeding installation according to the invention;
Figure 3 shows a front view of the feeding installation of Figure 2 in the direction of A.

The figures show a feeding installation 1 comprising an animal identification device 2 for emitting an animal recognition signal, a trough 3 with a feed-containing surface 4, a storage container 5 with an outflow aperture 6, a metering device 7 for metering feed on the feed-containing surface 4, a transport device for transporting feed from the outflow aperture 6 to the metering device 7, and a computer 9 for controlling the metering device 7 on the basis of the animal recognition signal, at least two side walls of the feeding installation being constituted by a strained tarpaulin 15, and the storage container 5 being disposed substantially in the lower part of the feeding installation. The outflow aperture 6 is located at a lower level than the feed-containing surface. The metering device 7 comprises a rotatable conveying device for metering feed by means of rotation on the feed-containing surface 4, the transport device and the conveying device being constituted by one single device. Said device is constituted by a transport auger 8. The transport auger 8 is driven by an electric motor 10 which is supplied with current by means of its own current supply. Said current supply comprises a solar panel 11 with solar cells 12, disposed at the upper side of the feeding installation 1. There are provided holes for the purpose of placing the solar panel in different positions with the aid of a support 13. The solar cells can also be detached from the feeding installation 1, so that they can be disposed on the ground beside the feeding installation 1. This has the advantage that the feeding installation 1 itself needs not to be situated per se in a sunny place. The current supply further comprises an accumulator 14 for storing superfluous electricity. A computer 9 ensures the control of the electricity and monitors the accumulator 14 in order that it will not be overloaded. The computer 9 is also capable of giving an alarm when the energy contents of the accumulator 14 comes below a particular level. In a non-shown advanced embodiment, the solar panel 11 can be automatically directed towards the sun, so that always the optimum amount of light will reach the solar panel 11.

In an alternative embodiment, the current supply takes place via a wind mill. Current supply via a fuel cell is also possible. The latter possibility has the advantages of no additional accumulator 14 being required, of being compact and of operating with fuels having a high energy density. It will be obvious that current supply is also possible via the normal fixed electricity grid. A current supply entirely based on accumulators 14 is also possible, of course. Regular replacement of accumulators 14 being required for this purpose, it is advantageous to provide the connection of said accumulators 14 with sliding connections or snap connections, known per se.

In order to protect the trough 3 with contents against weather influences, the upper side of the feeding installation 1 extends in such a way that it covers the feed-containing surface 4.

The long side of the feeding installation 1 comprises a flexible tarpaulin 15 strained by a frame 16. To enable this, in the tarpaulin 15 there are provided apertures through which a cord 25 has been threaded. Also the walls of the storage container 5 are constituted by a flexible tarpaulin. Said storage container 5 is also suspended from the frame 16. Such a construction makes it possible to disassemble the components of the entire feeding installation 1 quickly and without using complicated tools. The tarpaulin 15 occupies little room in the folded up position and has a light weight. Such a tarpaulin 15 has to be strong. A strong tarpaulin 15 is obtained by reinforcing it with a strong fibre or by building it up while using several layers. The conveying device is fastened directly and only to the storage container 5. By changes in the weight of the feed in the storage container 5 and because of the fact that the storage container 5 is made of flexible tarpaulin, the shape of the storage container 5 will be variable. Because of the direct connection of the conveying device to the tarpaulin of the storage container 5, the orientation of the conveying device will be capable of adapting itself smoothly to the different shapes of the storage container 5.

The construction of the feeding installation 1 is such that its components can easily be assembled or disassembled. All separate components are capable of being displaced by one person.

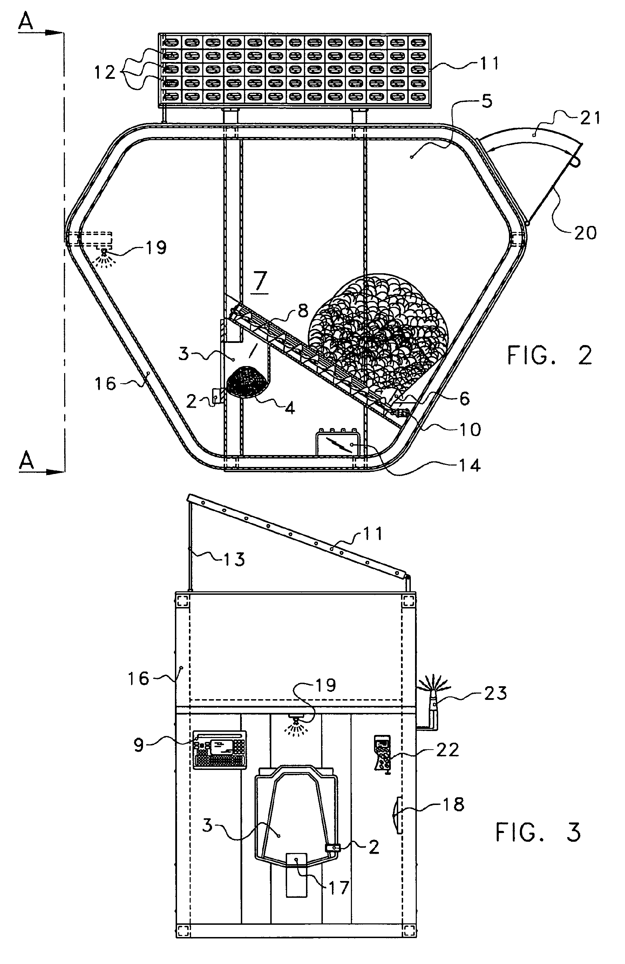

Figure 2 shows in more detail the interior of the feeding installation 1. The feed-containing surface 4 is disposed at the short side of the feeding installation 1 opposite the storage container 5. The feed-containing surface 4 is further provided with a closing device 17 for closing the access to the feed-containing surface 4 for an animal, the closing device 17 being controllable by the computer 9 (Figure 3). In the embodiment shown, the closing device 17 is designed as a flap which is capable of being rotated by means of a motor about a horizontal axis to before the entrance aperture of the trough 3. Such a closing device is known per se and may also be designed in another way, for example by means of a cylinder-operable flap. Below the feed-containing surface 4 there is disposed a non-shown weighing cell for the purpose of determining the amount of feed on the feed-containing surface 4.

There is provided a presence sensor 18 for detecting the presence of an animal near the feed-containing surface 4 and for emitting a presence signal to the computer 9. Said presence sensor 18 is designed as a light cell known per se.

The feeding installation 1 comprises an animal treatment device 19, in the form of a spraying device, for treating an animal during eating. In a non-shown embodiment, the animal treatment device 19 comprises a cattle brush known per se. Besides a skin-treating function, the brushing effect of said cattle brush is experienced by the animal as pleasant and the cattle brush ensures that the animal likes to visit the feeding installation 1.

The storage container 5 is provided with a filling aperture which is capable of being closed by means of a flap 20. In the opened position said flap 20 forms a hopper. For this purpose, side plates 21 are disposed on both sides of said flap 20.

There is further provided a hand terminal 22 for easily inputting data into the computer 9.

The dimensions of the described embodiment are such that two feeding installations 1 side by side fit into the loading platform of a pick-up. In this manner the feeding installation 1 is easily transportable in rough terrain. The position of the filling aperture is chosen in such a way that the storage container 5 can easily be filled from the same pick-up.

The feeding installation 1 constitutes part of a feeding system comprising a central computer connected to the computer 9 by means of a mobile communication system. The mobile communication system is designed as a GSM network. The computer 9 comprises a mobile telephone which is capable of communicating with the network with the aid of an antenna 23. The feeding system further comprises a (non-depicted) second feeding installation, the first feeding installation 1 being controllable by the central computer in dependence on the supply of feed by the second feeding installation.

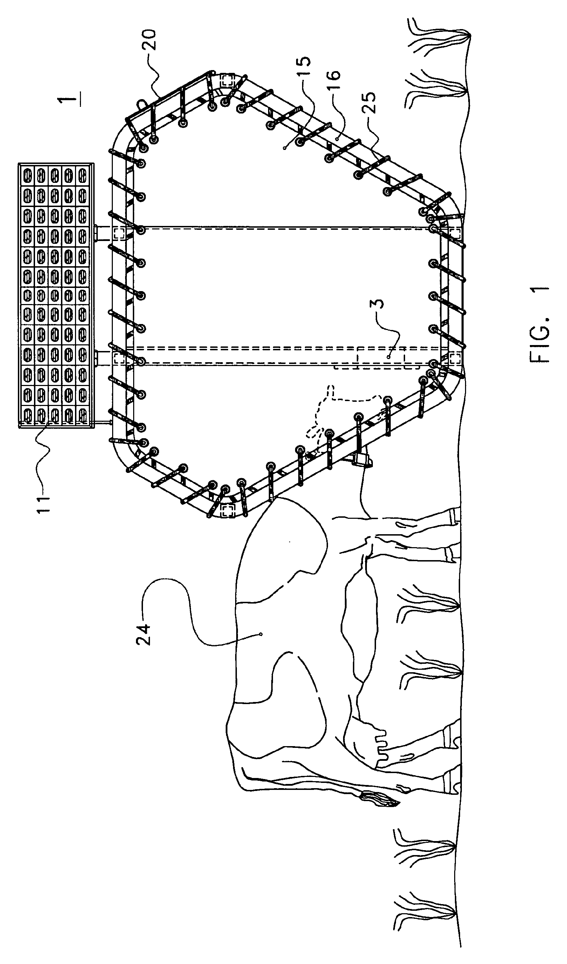

The operation of the feeding installation 1 is as follows. An animal to be fed, such as the cow 24 depicted in Figure 1, approaches the feeding installation 1 and puts its head under the covering. The animal is observed by the light cell 18. On the basis of the presence signal, the computer 9 activates the animal identification device 2 which is now going to transmit an electromagnetic recognition signal. In response to the recognition signal, the transponder around the neck of the animal 24 transmits an animal-specific signal by means of which the identity of the animal 24 is determined in a known manner. In a known manner the transponder can also be fastened to an ear of the animal. In that case, the receiver is fastened to the installation at one side of the trough 3. Subsequently the computer 9 determines, from its memory, the feed balance of the animal 24. If this balance is sufficiently positive, the closing device 17 is operated and the access to the trough 3 is released. The electric motor 10 is controlled in such a way that the number of revolutions corresponds to the allotted amount of feed. In this case the metering rate is adapted to the eating rate of the animal 24. When the animal 24 leaves, this is detected by the light cell 18. The computer 9 stops metering and controls the closing device 17 to close the trough 3, so that other animals are prevented from eating remaining feed, if any. The metering does not stop when the recognition signal falls away, but stops on the basis of the signal from the light cell 18. It is thus prevented that, if the animal puts its head far into the trough and the response signal from the transponder becomes weaker, this would be interpreted by the device as if the animal had left the device.

In a non-shown embodiment, the entrance to the trough 3 is closed by means of a flap that is capable of being pushed away, as disclosed in Dutch patent NL1027615.

It is also indicated in the memory of the computer 9 whether the animal 24 has to be treated with a medicament, such as for example a worming agent. In the embodiment, the spraying device 19 is activated by the computer 9 above the shoulder of the animal 24 during the time the animal 24 is eating. By doing this during the time the animal 24 is eating, the animal 24 is in a defined position and will be agitated less quickly by the treatment. When an animal 24 has been treated, the animal 24 is marked by a non-depicted second spraying device which sprays a colouring agent on the back of the animal 24.

The feeding installation 1 sends data via the antenna 23 and a GSM-network to the central computer, so that said central computer always has up-to-date information. The central computer also receives data from other feeding installations. When an animal has also eaten at a second feeding installation, the central computer will take the amount of feed consumed there into account and adapt the balance accordingly. This balance is then passed on via the communication system to the computer of the first feeding installation and stored in its memory.

The central computer is preferably located in the farmer's office. On the basis of a list of said central computer the farmer can see which animals have eaten at which feeding installation. This information is especially practical in extensive prairie areas, such as in the Australian out-back, to keep the herd remotely under watch. If it appears from the list that an animal has not visited a feeding installation 1 during some time, this may be an indication of illness and/or death. Via the mobile communication system, the separate feeding installations also pass on system parameters, such as accumulator voltage, current delivered and emptiness-reports of the storage container 5, to the central computer.

Because of the fact that the place where the feeding device is located is frequently visited by animals, in particular the place just before the trough 3 will suffer from stamping. As a result thereof that place will lose its vegetation and will turn into a quagmire. To counteract this, a non-shown feeding device comprises a flexible rubber mat whose front side is fastened to the feeding device and whose rear side can be lifted by means of two pulleys. This construction makes it possible to lay, in a quick and simple manner, a protection against stamping on the ground before the trough 3.

## Claims

1. A mobile feeding installation comprising an animal identification device (2) for emitting an animal recognition signal, a feed-containing surface (4), a storage container (5) with an outflow aperture (6), a metering device (7) for metering feed on the feed-containing surface (4), a transport device (8) for transporting feed from the outflow aperture (6) to the metering device (7), and a computer (9) for controlling the metering device (7) based on the animal recognition signal, **characterized in that** at least two side walls of the feeding installation are constituted by a strained tarpaulin (15), and **in that** the storage container (5) is disposed substantially in the lower part of the feeding installation.

2. A mobile feeding installation comprising an animal identification device (2) for emitting an animal recognition signal, a feed-containing surface (4), a storage container (5) with an outflow aperture (6), a metering device (7) for metering feed on the feed-containing surface (4), a transport device (8) for transporting feed from the outflow aperture (6) to the metering device (7), and a computer (9) for controlling the metering device (7) on the basis of the animal recognition signal, **characterized in that** the outflow aperture (6) is located at a lower level than the feed-containing surface (4).

3. A mobile feeding installation as claimed in claim 1 or 2, **characterized in that** the metering device (7) comprises a rotatable conveying device for metering feed by means of rotation.

4. A mobile feeding installation as claimed in claim 3, **characterized in that** the transport device (8) and the conveying device are constituted by one single device.

5. A mobile feeding installation as claimed in claim 3 or 4, **characterized in that** the conveying device comprises an auger.

6. A mobile feeding installation as claimed in claim 3, 4 or 5, **characterized in that** the conveying device is only fastened to the storage container.

7. A mobile feeding installation as claimed in any one of the preceding claims, **characterized in that** the feeding installation comprises its own current supply for at least the control of the transport device (8).

8. A mobile feeding installation as claimed in claim 7, **characterized in that** the current supply comprises a solar panel (11) with solar cells (12).

9. A mobile feeding installation as claimed in claim 8, **characterized in that** the solar panel (11) is disposed at the upper side of the feeding installation.

10. A mobile feeding installation as claimed in any one of the preceding claims, **characterized in that** the feed-containing surface (4) is provided with a closing device (17) for closing the access to the feed-containing surface (4) for an animal and the closing device (17) being controllable by the computer (9).

11. A mobile feeding installation as claimed in any one of the preceding claims, **characterized in that** the feeding installation comprises a short side and a long side, the short side comprising the feed-containing surface (4).

12. A mobile feeding installation as claimed in claim 11, **characterized in that** the long side comprises a flexible tarpaulin strained by a frame (16).

13. A mobile feeding installation as claimed in any one of the preceding claims, **characterized in that** the walls of the storage container (5) comprise a flexible tarpaulin.

14. A mobile feeding installation as claimed in any one of the preceding claims, **characterized in that** the storage container (5) comprises a filling aperture which is capable of being closed by a flap (20), the flap (20) constituting a hopper in the opened position.

15. A mobile feeding installation as claimed in any one of the preceding claims, **characterized in that** the upper side of the feeding installation extends in such a way that it covers the feed-containing surface (4) at the upper side.

16. A mobile feeding installation as claimed in any one of the preceding claims, **characterized in that that** there is provided a presence sensor (18) for detecting the presence of an animal near the feed-containing surface (4) and for emitting a presence signal to the computer (9).

17. A mobile feeding installation as claimed in any one of the preceding claims, **characterized in that** the animal identification device is capable of being activated by the presence signal.

18. A mobile feeding installation as claimed in any one of the preceding claims, **characterized in that** the feeding installation comprises wheels for displacing the device.

19. A mobile feeding installation as claimed in any one of the preceding claims, **characterized in that** the feeding installation comprises an animal treatment device (19), such as a spraying device or a marking device, for treating an animal during eating.
